# EUROPÄISCHE PATENTSCHRIFT

(11) **EP 2 035 268 B1**
(45) Veröffentlichungstag und Bekanntmachung des Hinweises auf die Patenterteilung: **21.07.2010**
(21) Anmeldenummer: 07729951.9
(22) Anmeldetag: 06.06.2007
(51) Int. Cl.: B60T 10/02

(54) **HYDRODYNAMISCHER RETARDER**
HYDRODYNAMIC RETARDER
RALENTISSEUR HYDRODYNAMIQUE

(30) Priorität: 30.06.2006 DE 102006030792
(43) Veröffentlichungstag der Anmeldung: 18.03.2009
(73) Patentinhaber: ZF Friedrichshafen AG, 88038 Friedrichshafen (DE)
(72) Erfinder: GRUPP, Bernhard, 88250 Weingarten (DE); REISCH, Bernhard, 88316 Isny (DE); SAUTER, Frank, 88074 Meckenbeuren (DE); WANNINGER, Heinz, 88074 Meckenbeuren (DE)
(86) Internationale Anmeldenummer: PCT/EP2007/055576
(87) Internationale Veröffentlichungsnummer: WO 2008/000604

(56) Entgegenhaltungen:
- DE-A1- 4 136 759
- DE-A1- 10 141 794
- DE-A1- 19 909 690
- DE-A1- 19 951 731

## Beschreibung

Die vorliegende Erfindung betrifft einen hydrodynamischen Retarder für ein Kraftfahrzeug nach der im Oberbegriff von Anspruch 1 näher definierten Art.

Neben den Betriebsbremsen eines Fahrzeugs, insbesondere eines Nutzfahrzeugs, die im Regelfall einem Verschleiß unterliegende Reibungsbremsen sind, werden zusätzliche, verschleißfreie Verzögerungseinrichtungen von den Fahrzeugherstellern angeboten. Derartige Verzögerungseinrichtungen, beispielsweise Retarder oder Motorbremsen, können unter anderem dazu verwendet werden, die Fahrzeuggeschwindigkeit im Gefälle konstant zu halten.

Zu den Retardern zählen sowohl zusätzlich am Getriebe oder Motor angeordnete hydrodynamische, hydrostatische oder elektrodynamische Bremseinrichtungen, als auch solche Systeme, die in Form eines "Intarders" innerhalb des Getriebegehäuses vorgesehen sind. Des Weiteren werden Retarder in Primärretarder, die in Abhängigkeit von der Motordrehzahl arbeiten, und in Sekundärretarder, die in Abhängigkeit von der Fahrzeuggeschwindigkeit arbeiten, unterschieden. Bei hydrodynamischen Retardern ist im Allgemeinen der Rotor zum Abbremsen des Fahrzeugs direkt mit einer Getriebeinrelle verbunden. Bei Primärretardern ist dies die Antriebswelle bzw. Getriebeeingangswelle, und bei Sekundärretardern ist dies die Getriebeabtriebswelle. Der Stator ist in der Regel gehäusefest Der Retarder ist üblicherweise nicht aktiviert, wenn Rotor und Stator nicht mit Flüssigkeit befüllt sind.

Retarder werden bei Nutzfahrzeugen vor allem eingesetzt, um die beispielsweise bei einer Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Zur Steuerung werden bei Retardern nach dem Stand der Technik im Wesentlichen zwei verschiedene Prinzipien angewandt.

Zum einen werden pneumatische Steuerungssysteme eingesetzt, bei denen ein Regeldruck eines Retarders durch einen Luftdruck direkt auf einen Arbeitsmedium- bzw. Ölspiegel eingestellt wird. Nachteilig sind hier das begrenzte Regelverhalten und die Notwendigkeit einer Trennungseinheit zwischen Arbeitsmedium und Luftdruck sowie das Vorhandensein einer fahrzeugseitigen Pneumatikversorgung.

Zum anderen werden Steuerungen eingesetzt, bei denen der hydraulische Druck durch eine permanent angetriebene Hydraulikpumpe bereitgestellt wird, bevorzugterweise durch eine Zahnradpumpe Nachteilig bei diesem Konzept ist der drehzahlabhängige Volumenstrom der verwendeten Pumpe, was insbesondere bei niedrigen Drehzahlen einen Befüllspeicher und bei hohen Drehzahlen große Ventil- und Strömungsquerschnitte erforderlich macht.

Nachteile der beschriebenen Steuerungssysteme für einen Retarder sind unter anderem eine schlechte Wiederansprechzeit der Systeme sowie zusätzliche Kosten für beispielsweise einen Speicher und für Steuerventile. Des Weiteren ist ein großer Bauraum erforderlich.

In der DE 101 41 794 A1 wird ein hydrodynamischer Retarder für ein Kraftfahrzeug offenbart, welcher über einen hydraulischen Kreislauf angesteuert wird. Der hydraulische Kreislauf weist einen Wärmetauscher und eine Hydraulikpumpe auf, wobei das Fördervolumen der Hydraulikpumpe derart verstellbar ist, dass ein Volumenstrom unabhängig von der Fahrzeuggeschwindigkeit bzw. der Gelenkwellen- oder Retarderdrehzahl einstellbar ist. Gemäß einer Ausführungsform wird die Hydraulikpumpe so geschaltet bzw. geregelt, dass sich über einen weiten Drehzahlbereich ein konstanter Volumenstrom einstellt, welcher zum Befüllen und Regeln des Retarders ausreichend ist. Diese Konstruktion weist den Vorteil auf, dass kein Befüllspeicher benötigt wird. Außerdem ist die Wiederansprechzeit der Hydraulikpumpe gleich der Erstansprechzeit, so dass sich ein robustes zeitliches Verhalten ergibt. Wird eine Bremsung eingeleitet, so muss der Retarder möglichst schnell befüllt werden. Hierfür wird über ein Proportionalventil ein Steuerdruck erzeugt, der die Hydraulikpumpe auf eine maximale Verdrängung einstellf. Um die geforderte Ansprechzeit des Systems sicherzustellen, ist ein großer Ölvolumenstrom notwendig.

Ein Nachteil hierbei ist es, dass ein großer Ölvolumenstrom über einen Getriebesaugkanal nicht immer zur Verfügung gestellt werden kann, da es zu Kavitation und Luftansaugung in einem Ölhaushalt kommen kann. Unter Kavitation wird eine Blasenbildung in Flüssigkeiten bei niedrigem Druck verstanden. Somit kann eine geforderte Ansprechzeit des Systems nicht immer sichergestellt werden.

Der vorliegenden Erfindung liegt die Aufgabe zugrunde, eine Ansprechzeit eines Systems zur Ansteuerung eines hydrodynamischen Retarders zu verbessern und die Nachteile des Standes der Technik zu beseitigen.

Die der Erfindung zugrunde liegende Aufgabe wird durch einen, auch die kennzeichnenden Merkmale des Hauptanspruchs aufweisenden, gattungsgemäßen, hydrodynamischen Retarder gelöst.

Die Erfindung beinhaltet einen hydrodynamischen Retarder für ein Getriebe in einem Kraftfahrzeug, welcher einen Rotor und einen Stator aufweist. Der Retarder wird über ein elektrohydraulisches System angesteuert, welches unter anderem eine Steuerungs- und Regelungseinheit, einen Hydraulikkreislauf, Schaltventile und einen gemeinsamen Ölhaushalt zwischen Getriebe und Retarder aufweist. Der Rotor und der Stator sind vorzugsweise in einem Retardergehäuse angeordnet, welches mit dem Hydraulikkreislauf verbunden ist. Der Hydraulikkreislauf weist einen Filter, eine Hydraulikpumpe, einen Wärmetauscher sowie ein Schaltventil und Hydraulikkanäle auf. Das Fördervolumen der Hydraulikpumpe ist derart verstellbar, dass ein Volumenstrom unabhängig von der Fahrzeuggeschwindigkeit bzw. der Gelenkwellen- oder Retarderdrehzahl einstellbar ist.

Während einer bremsfreien Phase wird über die Hydraulikpumpe von einem Getriebesumpf Öl angesaugt. Dieses Öl wird durch einen Wärmetauscher geleitet, wodurch die Öltemperatur an eine Temperatur eines Kühlmittels in einem Fahfzeugkühlsystem angepasst wird. Bei Getrieben mit gemeinsamem Ölhaushalt ist die Saugstelle vorteilhafterweise im vorderen Bereich der Gehäuse angeordnet, um einen guten Austausch des Öls und somit eine effektive Temperierung des Getriebes sicherzustellen. Im Hydraulikkreislauf sind das Schaltventil und eine Blende, welche einen definierten hydraulischen Querschnitt darstellt, angeordnet, welche in Verbindung mit den Hydraulikkanälen einen entsprechenden Druckabfall erzeugen. Dieser Druck wirkt auf eine Rückführfläche an der Hydraulikpumpe, wodurch diese den erforderlichen Volumenstrom unabhängig von der Pumpendrehzahl selbständig steuert bzw. regelt. Im elektrohydraulischen System ist ein weiteres Schaltventil vorgesehen. Der Ventilhub dieses Schaltventils kann durch einen Elektromagneten erzeugt werden. Durch eine entsprechende Ansteuerung des Elektromagneten wird eine Kraft erzeugt, welche auf den Kolben des Schaltventils wirkt, wodurch dieser entsprechend verschoben wird und dadurch das Schaltventil im Hydraulikkreislauf betätigt und somit der Retarder zu- bzw. abgeschaltet wird. Die Höhe der Bremswirkung wird über den Pumpendruck der Hydraulikpumpe eingestellt. Dieser wiederum lässt sich durch ein weiteres Ventil im System variieren, beispielsweise durch ein Proportionalventil. Wird eine Bremsung eingeleitet, so muss der Retarder möglichst schnell befüllt werden. Hierfür wird über das Proportionalventil ein Steuerdruck erzeugt, der die Hydraulikpumpe auf eine vorzugsweise maximale Verdrängung einstellt. Um eine geforderte Ansprechzeit des Systems sicher zu stellen, ist ein großer Ölvolumenstrom erforderlich.

Um diesen Ölvolumenstrom trotz eines relativ langen Getriebesaugkanals und einer auftretenden Kavitation bzw. Luftansaugung sicher zu gewährleisten, weist das elektrohydraulische System zur Ansteuerung des hydrodynamischen Retarders erfindungsgemäß ein Befüllventil auf. Dieses Befüllventil kann in verschiedenen Ausführungsformen ausgebildet sein beispielsweise als Rückschlagventil, als 2/2-Wegeventil oder als 3/2-Wegeventil. Das Rückschlagventil kann beispielsweise als Kugelrückschlag-, Schieberrückschlag- oder Lamellenventil ausgebildet sein. Durch das Befüllventil kann eine Verbindung zwischen einem am Retarder liegenden Ölreservoir und einem Saugkanal der Hydraulikpumpe hergestellt werden. Somit wird sichergestellt, dass der Retarder in ausreichend kurzer Zeit zusätzlich aus diesem Ölreservoir befüllt werden kann. Über den Getriebes.augkanal muss daher nicht mehr die gesamte Ölmenge aus dem Getriebesumpf angesaugt werden. Dadurch werden auftretende Kavitation und Luftansaugung vermindert und die Ansprechzeit des Systems wird deutlich verbessert. Das Ölreservoir kann direkt durch das Retardergehäuse oder durch einen vorzugsweise nahe am Retarder liegenden externen Behälter dargestellt werden. Die Bauform des Ölreservoirs kann dabei beliebig sein. Eine Zylinderform wie bei einem pneumatischen Speicher ist nicht erforderlich. Eine im System abfallende Leckage kann durch die Hydraulikpumpe ausgeglichen werden. Zur Entlüftung des Ölreservoirs kann dieses mit einem Getriebeentlüftungssystem bzw. mit einem Getriebeentlüfter in Verbindung stehen, oder eine eigene Entlüftungsvorrichtung aufweisen. Das Befüllventil kann vorzugsweise hydraulisch betätigbar ausgebildet sein und mit demselben Ventil angesteuert bzw. geregelt werden, wie die Hydraulikpumpe. Hierdurch entstehen keine zusätzlichen Kosten und kein zusätzlicher fertigungstechnischer Aufwand. Des Weiteren ist es ebenfalls denkbar, dass das Befüllventil über die bereits vorhandene Steuerungs- und Regelungseinheit oder über eine eigene Einheit angesteuert wird. Das Befüllventil kann derart ausgebildet sein, dass es beispielsweise hydraulisch, pneumatisch, elektrisch bzw elektromagnetisch oder über einen Stellmotor angesteuert werden kann. Das erfindungsgemäße elektrohydraulische System ist sowohl bei Primär- als auch bei Sekundärretardern implementierbar.

Im Folgenden wird das Grundprinzip der Erfindung, welche mehrere Ausführungsformen zulässt, an Hand einer Zeichnung beispielhaft näher erläutert.

Es zeigen:
- Fig. 1: ein Steuerschema eines hydrodynamischen Retarders gemäß einer ersten Ausführungsform der vorliegenden Er- findung,
- Fig. 2: ein Steuerschema eines hydrodynamischen Retarders gemäß einer zweiten Ausführungsform der vorliegenden Erfindung und
- Fig. 3: ein Steuerschema eines hydrodynamischen Retarders gemäß einer dritten Ausführungsform der vorliegenden Er- findung.

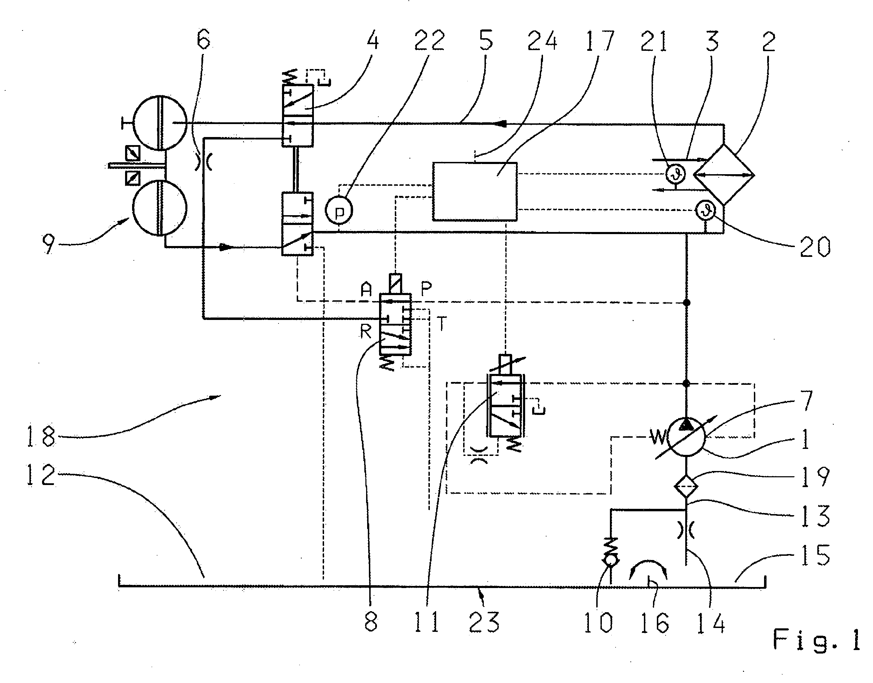

Gemäß Fig. 1 weist ein elektrohydraulisches System 18 zur Steuerung eines hydrodynamischen Retarders 9 eine Steuerung- und Regelungseinheit 17, einen Hydraulikkreislauf 5, Ventile 4, 8, 10, 11 sowie einen gemeinsamen Ölhaushalt 23 auf. Der Hydraulikkreislauf 5 weist eine Hydraulikpumpe 1, einen Filter 19, einen Wärmetauscher 2 und das Schaltventil 4 auf. Ferner ist die Steuerungs- und Regelungseinheit 17 mit Temperatursensoren 20, 21 und einem Drucksensor 22 verbunden. Über den ersten Temperatursensor 20 wird die Öltemperatur und über den zweiten Temperatursensor 21 wird die Temperatur eines Fahrzeugkühlsystems 3 überwacht. Der Drucksensor 22 kann zur Überwachung eines Regeldrucks für den Retarder 9 vorgesehen sein. Die Steuerungs- und Regelungseinheit 17 kann vorteilhafterweise mit einem Controller Area Network (CAN) 24 verbunden sein. Über die Steuerungs- und Regelungseinheit 17 sind unter anderem die Ventile 8, 11 ansteuerbar. Das erste Ventil 8 kann als Sicherheitsabschaltventil dienen und das zweite Ventil 11 ist vorzugsweise als Proportionalventil ausgebildet und dient zur Steuerung bzw. Regelung der Hydraulikpumpe 1. Der gemeinsame Ölhaushalt 23 besteht aus einem Ölreservoir 12 des Retarders 9 und einem Getriebesumpf 1.5 eines Getriebes. Im elektrohydraulischen System 18 ist vorgesehen, dass die Hydraulikpumpe 1 als eine in ihrem Verdrängungsvolumen verstellbare Pumpe ausgebildet ist. Zwischen der Hydraulikpumpe 1 und dem Ölreservoir 12 bzw. dem Getriebesumpf 15 ist in einem Saugkanal 13 der Filter 19 angeordnet.

Während einer bremsfreien Phase saugt die Hydraulikpumpe 1 vom Getriebesumpf 15 Öl an, welches durch den Wärmetauscher 2 geleitet wird. Hierdurch wird die Öltemperatur an die Temperatur eines Kühlmittels in einem Fahrzeugkühlsystem 3 angepasst. Im Hydraulikkreislauf 5 sind das Schaltventil 4 und eine Blende 6 angeordnet, welche in Verbindung mit den Hydraulikkanälen einen entsprechenden Druckabfall erzeugen. Dieser Druck wirkt auf eine Rückführfläche 7 an der Hydraulikpumpe 1, wodurch diese einen erforderlichen Volumenstrom unabhängig von der Pumpendrehzahl selbständig regeln kann. Durch eine Betätigung des Schaltventils 8 wird das Schaltventil 4 im Hydraulikkreislauf 5 betätigt und somit der Retarder 9 zu- bzw. abgeschaltet. Die Höhe der Bremswirkung wird über den Pumpendruck der Hydraulikpumpe 1 eingestellt. Dieser wiederum lässt sich durch das Ventil 11 variieren, beispielsweise durch ein Proportionalventil. Wird eine Bremsung eingeleitet, so muss der Retarder 9 möglichst schnell befüllt werden. Hierfür wird über das Proportionalventil 11 ein Steuerdruck erzeugt, der die Hydraulikpumpe 1 auf eine maximale Verdrängung einstellt. Um die geforderte Ansprechzeit des Systems zu gewährleisten, ist ein großer Ölvolumenstrom erforderlich.

Um diesen Ölvolumenstrom trotz eines relativ langen Getriebesaugkanals 14 und einer auftretenden Kavitation bzw. Luftansaugung sicher zu gewährleisten, weist das elektrohydraulische System 18 zur Ansteuerung des hydrodynamischen Retarders 9 erfindungsgemäß das Befüllventil 10 auf. Durch das Befüllventil 10 kann eine Verbindung zwischen dem Ölreservoir 12 und dem Saugkanal 13 der Hydraulikpumpe 1 hergestellt werden. Das Ölreservoir 12 ist vorzugsweise nahe am Retarder 9 liegend angeordnet. Somit wird sichergestellt, dass der Retarder 9 in ausreichend kurzer Zeit zusätzlich aus diesem Ölreservoir 12 befüllt werden kann. Über den Getriebesaugkanal 14 muss daher nicht mehr die gesamte Ölmenge angesaugt werden. Das Befüllventil 10 ist als Rückschlagventil dargestellt, welches ab einem bestimmten Saugunterdruck, der oberhalb eines vorbestimmten Saugunterdruckes liegt, öffnet und die Verbindung vom Ölreservoir 12 zur Hydraulikpumpe 1 frei gibt. Das Befüllventil 10 öffnet sich, wenn von der Hydraulikpumpe 1 ein vordefinierter Volumenstrom überschritten wird. Es handelt sich also um eine bedarfsgerechte, selbsttätige Öffnungs- und Schließfunktion, ohne einen zusätzlich notwendigen Eingriff von außen. Die Konstruktion ist somit einfach anzuordnen und robust. Auftretende Kavitation und Luftansaugung werden vermindert und die Ansprechzeit des Systems 18 wird deutlich verbessert, Eine im elektrohydraulischen System 18 anfallende Leckage kann durch die Hydraulikpumpe 1 ausgeglichen werden. Vorteilhafterweise wird die Leckage und das nach dem Ausschalten des Retarders 9 frei werdende Ölvolumen zurück in das Ölreservoir 12 geleitet, wodurch sofort nach dem Ausschalten des Retarders 9 wieder genügend Öl für die nächste Bremsung bereit steht und somit eine Wiederansprechzeit des Systems 18 gleich der Erstansprechzeit ist. In bremsfreien Phasen kann das Öl durch die Hydraulikpumpe 1 aus dem Getriebesumpf 15 über den Wärmetauscher 2 in das Ölreservoir 12 geleitet werden. Das Ölreservoir 12 weist eine Überlaufkante 16 zum Getriebesumpf 15 auf. Erst wenn der Ölstand im Ölreservoir 12 einen bestimmten Füllstand erreicht hat, also das Ölreservoir 12 voll befüllt ist, läuft das überschüssige Öl zurück in den Getriebesumpf 15. So kann auch bei extremen Bergabfahrten genügend Öl in der Nähe des Retarders 9 auf Vorrat gehalten werden.

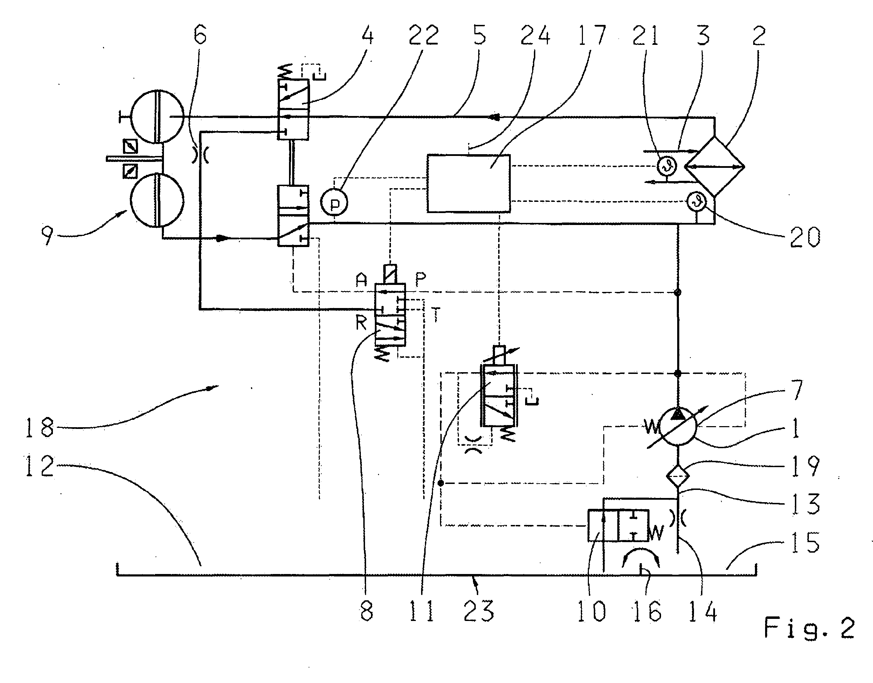

Die Fig. 2 zeigt eine zweite Ausführungsform der Erfindung. Der einzige Unterschied zu der in der Fig. 1 beschriebenen Ausführungsform besteht darin, dass das Befüllventil 10 nicht als Rückschlagventil, sondern als 2/2-wegeventil ausgebildet ist. Das 2/2-Wegeventil kann vorzugsweise mittels hydraulischen Drucks angesteuert werden. Vorteilhafterweise wird die Anordnung so gewählt, dass die Hydraulikpumpe 1 und das 212-Wegeventil mit demselben Ventil 11 angesteuert bzw. geregelt werden können, beispielsweise mit einem Proportionalventil. Durch eine permanente Verbindung zum Getriebe kann über den Getriebesaugkanal 14 grundsätzlich aus dem Getriebesumpf 15 Öl angesaugt und somit eine eventuell auftretende Leckage im Hydraulikkreislauf 5 ausgeglichen werden.

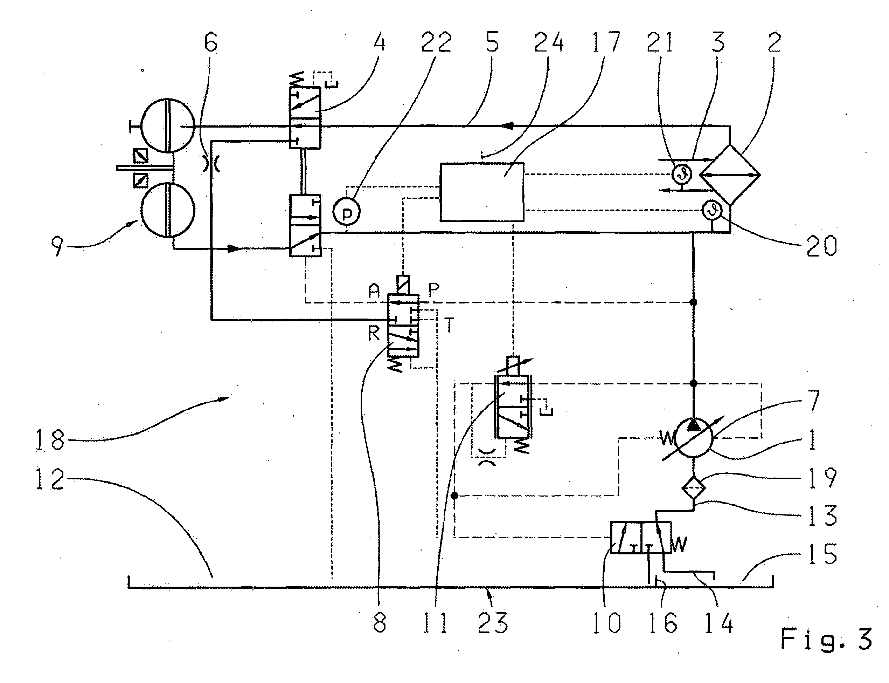

Die Fig. 3 zeigt eine dritte Ausführungsform der Erfindung. Der einzige Unterschied zu den in der Fig. 1 und Fig. 2 beschriebenen Ausführungsformen besteht darin, dass das Befüllventil 10 als 3/2-Wegeventil ausgebildet ist, welches zwischen dem Saugkanal 13 und dem Ölreservoir 12 sowie dem Getriebesumpf 15 angeordnet ist. Das 3/2-wegeventil kann vorzugsweise mittels hydraulischen Drucks angesteuert werden. Vorteilhafterweise wird die Anordnung so gewählt, dass die Hydraulikpumpe 1 und das 3/2-Wegeventil mit demselben Ventil 11 angesteuert bzw. geregelt werden können, beispielsweise mit einem Proportionalventil. Durch diese Anordnung kann der Retarder 9 ausschließlich aus dem Ölreservoir 12 befüllt werden. Es besteht somit eine nahezu vollständige Trennung zwischen dem Retarder 9 und dem Getriebesumpf 15. Unzulässige Saugunterdrücke im Bereich des Getriebesaugkanals 14 können somit während einer Zuschaltphase des Retarders 9 verhindert werden. In der Fig. 3 ist das als 3/2-Wegeventil ausgebildete Befüllventil 10 in nichtbetätigtem Zustand dargestellt, wodurch Öl aus dem Getriebesumpf 15 angesaugt werden kann. Wird das Befüllventil 10 betätigt, so wird die Verbindung zwischen dem Ölreservoir 12 und dem Saugkanal 13 hergestellt und die Verbindung zwischen dem Getriebesumpf 15 und dem Saugkanal 13 unterbrochen. Somit kann der Retarder 9 ausschließlich aus dem Ölreservoir 12 befüllt werden.

### Bezugszeichen

- 1: Hydraulikpumpe
- 2: Wärmetauscher
- 3: Fahrzeugkühlsystem
- 4: Schaltventil
- 5: Hydraulikkreislauf
- 6: Blende, Drossel
- 7: Rückführfläche an der Hydraulikpumpe
- 8: Schaltventil
- 9: Retarder
- 10: Befüllventil
- 11: Schaltventil
- 12: Ölreservoir
- 13: Saugkanal
- 14: Getriebesaugkanal
- 15: Getriebesumpf
- 16: Überlaufkante
- 17: Steuerungs- und Regelungseinheit, ECU
- 18: elektrohydraulisches System
- 19: Filter
- 20: Temperatursensor
- 21: Temperatursensor
- 22: Drucksensor
- 23: gemeinsamer Ölhäushalt
- 24: Controller Area Network (CAN)

## Patentansprüche

1. Hydrodynamischer Retarder (9) für ein Kraftfahrzeug, welcher einen Rotor und einen Stator aufweist und mit einem Getriebe einen gemeinsamen Ölhaushalt (23) bildet, mit einer Steuerungs- und Regelungseinheit (17) und einem Hydraulikkreislauf (5), welcher eine Pumpe (1), einen Wärmetauscher (2) und ein Ventil (4) aufweist, wobei ein Volumenstrom der Pumpe (1) unabhängig von der Fahrzeuggeschwindigkeit bzw. der Gelenkwellen- oder Retarderdrehzahl verstellbar ist, **dadurch gekennzeichnet, dass** der gemeinsame Ölhaushalt (23) aus einem Ölreservoir (12) und einem Getriebesumpf (15) besteht und das Ölreservoir (12) über ein Befüllventil (10) mit einem Saugkanal (13) der Pumpe (1) verbindbar ist.

2. Hydrodynamischer Retarder (9) nach Anspruch 1, **dadurch gekennzeichnet, dass** das Befüllventil (10) als 2/2-Wegeventil ausgebildet ist.

3. Hydrodynamischer Retarder (9) nach Anspruch 1, **dadurch gekennzeichnet, dass** das Befüllventil (10) als 3/2-Wegeventil ausgebildet ist.

4. Hydrodynamischer Retarders (9) nach einem der Ansprüche 1 bis 3, **dadurch gekennzeichnet, dass** das Befüllventil (10) über ein bereits vorhandenes Schaltventil (11) hydraulisch ansteuerbar ist, beispielsweise durch ein Proportionalventil.

5. Hydrodynamischer Retarder (9) nach einem der Ansprüche 1 bis 3, **dadurch gekennzeichnet, dass** das Befüllventil (10) über die Steuerungs- und Regelungseinheit (17) ansteuerbar ist.

6. Hydrodynamischer Retarder (9) nach einem der Ansprüche 1 bis 3, **dadurch gekennzeichnet, dass** das Befüllventil (10) über eine separate Einheit ansteuerbar ist, beispielsweise elektrisch bzw. elektromagnetisch, hydraulisch, pneumatisch oder über einen Stellmotor.

7. Hydrodynamischer Retarder (9) nach Anspruch 1, **dadurch gekennzeichnet, dass** das Befüllventil (10) als Rückschlagventil ausgebildet ist.

8. Hydrodynamischer Retarder (9) nach Anspruch 1, **dadurch gekennzeichnet, dass** der gemeinsame Ölhaushalt (23) zwischen dem Ölreservoir (12) und dem Getriebesumpf (15) eine Überlaufkante (16) aufweist.

9. Hydrodynamischer Retarder (9) nach einem der vorangegangenen Ansprüche, **dadurch gekennzeichnet, dass** das Ölreservoir (12) so angeordnet ist, dass es durch Leckage und durch ein nach dem Ausschalten des Retarders (9) frei werdendes Ölvolumen permanent befüllbar ist.

10. Hydrodynamischer Retarder (9) nach einem der vorangegangenen Ansprüche, **dadurch gekennzeichnet, dass** das Ölreservoir (12) zusätzlich durch die Pumpe (1) mit Öl aus dem Getriebesumpf (15) befüllbar ist.

11. Hydrodynamischer Retarders (9) nach einem der vorangegangenen Ansprüche, **dadurch gekennzeichnet, dass** das Ölreservoir (12) sowohl im Retardergehäuse als auch durch einen separaten, externen Behälter darstellbar ist.

12. Hydrodynamischer Retarder (9) nach einem der vorangegangenen Ansprüche, **dadurch gekennzeichnet, dass** das Ölreservoir (12) möglichst nahe am Retarder (9) angeordnet ist.

13. Hydrodynamischer Retarder (9) nach einem der vorangegangenen Ansprüche, **dadurch gekennzeichnet, dass** das Ölreservoir (12) eine Verbindung zu einem Getriebeentlüftungssystem bzw. einem Getriebeentlüfter aufweist.

14. Hydrodynamischer Retarder (9) nach einem der Ansprüche 1 bis 12, **dadurch gekennzeichnet, dass** das Ölreservoir (12) eine eigene Entlüftungsvorrichtung aufweist.

15. Verfahren zur Ansteuerung eines hydrodynamischen Retarders (9) für ein Kraftfahrzeug, welcher über ein elektrohydraulisches System (18), mit einer Steuerungs- und Regelungseinheit (17), angesteuert wird und mit einem Getriebe einen gemeinsamen Ölhaushalt (23) bildet, wobei ein Volumenstrom einer Pumpe (1) unabhängig von der Fahrzeuggeschwindigkeit bzw. der Gelenkwellen- oder Retarderdrehzahl verstellbar ist, **dadurch gekennzeichnet, dass** der gemeinsame Ölhaushaft (23) aus einem Ölreservoir (12) und einem Getriebesumpf (15) besteht und das Ölreservoir (12) über ein Befüllventil (10) mit einem Saugkanal (13) der Pumpe (1) verbunden wird.

16. Verfahren nach Anspruch 15, **dadurch gekennzeichnet, dass** das Befüllventil (10) hydraulisch angesteuert wird, vorzugsweise überein bereits vorhandenes Ventil (11), welches beispielsweise als Proportionalventil ausgebildet ist.

17. Verfahren nach Anspruch 15, **dadurch gekennzeichnet, dass** das Befüllventil (10) über die Steuerungs- und Regefungseinheit (17) elektrisch bzw. elektromagnetisch angesteuert wird.

18. Verfahren nach Anspruch 15, **dadurch gekennzeichnet, dass** das Befüllventil (10) über eine separate Einheit angesteuert wird, beispielsweise elektrisch bzw. elektromagnetisch, hydraulisch, pneumatisch oder über einen Stellmotor.

19. Verfahren nach einem der Ansprüche 15 bis 18, **dadurch gekennzeichnet, dass** das Ölreservoir (12) durch eine vorhandene Leckage und durch ein nach dem Ausschalten des Retarders (9) frei werdendes Ölvolumen permanent befüllt wird.

20. Verfahren nach einem der Ansprüche 15 bis 19, **dadurch gekennzeichnet, dass** das Ölreservoir (12) zusätzlich durch die Pumpe (1) mit Öl aus dem Getriebesumpf (15) befüllt wird,

21. Verfahren nach einem der Ansprilche 15 bis 20, **dadurch gekennzeichnet, dass** das Ölreservoir (12) über ein Getriebeentlüftungssystem bzw. einen Getriebeentlüfter entlüftet wird.

22. Verfahren nach einem der Anspruche 15 bis 20, **dadurch gekennzeichnet, dass** das Ölreservoir (12) über eine eigene Entlüftungsvorrichtung entlüftet wird.

## Claims

1. Hydrodynamic retarder (9) for a motor vehicle, which retarder (9) has a rotor and a stator and forms a shared oil system (23) with a transmission, having a control and regulating unit (17) and a hydraulic circuit (5), which has a pump (1), a heat exchanger (2) and a valve (4), a volume flow of the pump (1) being adjustable independently of the vehicle speed or the rotational speed of the cardan shaft or the retarder, **characterized in that** the shared oil system (23) comprises an oil reservoir (12) and a transmission sump (15), and the oil reservoir (12) can be connected to a suction channel (13) of the pump (1) via a charge valve (10).

2. Hydrodynamic retarder (9) according to Claim 1, **characterized in that** the charge valve (10) is designed as a 2/2-way valve.

3. Hydrodynamic retarder (9) according to Claim 1, **characterized in that** the charge valve (10) is designed as a 3/2-way valve.

4. Hydrodynamic retarder (9) according to one of Claims 1 to 3, **characterized in that** the charge valve (10) can be activated hydraulically by means of an existing switching valve (11), for example by a proportional valve.

5. Hydrodynamic retarder (9) according to one of Claims 1 to 3, **characterized in that** the charge valve (10) can be activated by means of the control and regulating unit (17).

6. Hydrodynamic retarder (9) according to one of Claims 1 to 3, **characterized in that** the charge valve (10) can be activated by means of a separate unit, e.g. electrically or electromagnetically, hydraulically, pneumatically or by means of a positioning motor.

7. Hydrodynamic retarder (9) according to Claim 1, **characterized in that** the charge valve (10) is designed as a non-return valve.

8. Hydrodynamic retarder (9) according to Claim 1, **characterized in that** the shared oil system (23) has an overflow edge (16) between the oil reservoir (12) and the transmission sump (15).

9. Hydrodynamic retarder (9) according to one of the preceding claims, **characterized in that** the oil reservoir (12) is arranged in such a way that it can be filled continuously by leakage and by an oil volume that becomes free after the retarder (9) is switched off.

10. Hydrodynamic retarder (9) according to one of the preceding claims, **characterized in that** the oil reservoir (12) can additionally be filled with oil from the transmission sump (15) by the pump (1).

11. Hydrodynamic retarder (9) according to one of the preceding claims, **characterized in that** the oil reservoir (12) can be formed both in the retarder housing and by a separate, external tank.

12. Hydrodynamic retarder (9) according to one of the preceding claims, **characterized in that** the oil reservoir (12) is arranged as close as possible to the retarder (9).

13. Hydrodynamic retarder (9) according to one of the preceding claims, **characterized in that** the oil reservoir (12) has a connection to a transmission air bleed system or a transmission air bleeder.

14. Hydrodynamic retarder (9) according to one of Claims 1 to 12, **characterized in that** the oil reservoir (12) has its own air bleed device.

15. Method for activating a hydrodynamic retarder (9) for a motor vehicle, which retarder (9) is activated by means of an electrohydraulic system (18), having a control and regulating unit (17), and forms a shared oil system (23) with a transmission, a volume flow of a pump (1) being adjustable independently of the vehicle speed or the rotational speed of the cardan shaft or the retarder, **characterized in that** the shared oil system (23) comprises an oil reservoir (12) and a transmission sump (15), and the oil reservoir (12) is connected to a suction channel (13) of the pump (1) via a charge valve (10).

16. Method according to Claim 15, **characterized in that** the charge valve (10) is hydraulically activated, preferably by means of an existing valve (11), which is designed as a proportional valve, for example.

17. Method according to Claim 15, **characterized in that** the charge valve (10) is activated electrically or electromagnetically by means of the control and regulating unit (17).

18. Method according to Claim 15, **characterized in that** the charge valve (10) is activated by means of a separate unit, e.g. electrically or electromagnetically, hydraulically, pneumatically or by means of a positioning motor.

19. Method according to one of Claims 15 to 18, **characterized in that** the oil reservoir (12) is filled continuously by existing leakage and by an oil volume that becomes free after the retarder (9) is switched off.

20. Method according to one of Claims 15 to 19, **characterized in that** the oil reservoir (12) is additionally filled with oil from the transmission sump (15) by the pump (1).

21. Method according to one of Claims 15 to 20, **characterized in that** air is removed from the oil reservoir (12) by means of a transmission air bleed system or a transmission air bleeder.

22. Method according to one of Claims 15 to 20, **characterized in that** air is removed from the oil reservoir (12) by means of its own air bleed device.

## Revendications

1. Ralentisseur hydrodynamique (9) pour un véhicule -automobile, qui présente un rotor et un stator et qui forme avec une transmission, une alimentation en huile commune (23), avec une unité de commande et de régulation (17) et un circuit hydraulique (5), qui présente une pompe (1), un échangeur de chaleur (2), et une soupape (4), un débit volumique de la pompe (1) pouvant être réglé indépendamment de la vitesse du véhicule ou de la vitesse de rotation de l'arbre d'articulation ou du ralentisseur, **caractérisé en ce que** l'alimentation en huile commune (23) se compose d'un réservoir d'huile (12) et d'un carter de transmission (15) et le réservoir d'huile (12) peut être connecté par le biais d'une soupape de remplissage (10) à un canal d'aspiration (13) de la pompe (1).

2. Ralentisseur hydrodynamique (9) selon la revendication 1, **caractérisé en ce que** la soupape de remplissage (10) est réalisée sous forme de soupape à 2/2 voies.

3. Ralentisseur hydrodynamique (9) selon la revendication 1, **caractérisé en ce que** la soupape de remplissage (10) est réalisée sous forme de soupape à 3/2 voies.

4. Ralentisseur hydrodynamique (9) selon l'une quelconque des revendications 1 à 3, **caractérisé en ce que** la soupape de remplissage (10) peut être commandée hydrauliquement par le biais d'une soupape de commutation déjà présente (11), par exemple par une soupape proportionnelle.

5. Ralentisseur hydrodynamique (9) selon l'une quelconque des revendications 1 à 3, **caractérisé en ce que** la soupape de remplissage (10) peut être commandée par le biais de l'unité de commande et de régulation (17).

6. Ralentisseur hydrodynamique (9) selon l'une quelconque des revendications 1 à 3, **caractérisé en ce que** la soupape de remplissage (10) peut être commandée par le biais d'une unité séparée, par exemple de manière électrique, électromagnétique, hydraulique, pneumatique ou par le biais d'un moteur de commande.

7. Ralentisseur hydrodynamique (9) selon la revendication 1, **caractérisé en ce que** la soupape de remplissage (10) est réalisée sous forme de soupape anti-retour.

8. Ralentisseur hydrodynamique (9) selon la revendication 1, **caractérisé en ce que** l'alimentation en huile commune (23) présente un bord de trop-plein (16) entre le réservoir d'huile (12) et le carter de transmission (15).

9. Ralentisseur hydrodynamique (9) selon l'une quelconque des revendications précédentes, **caractérisé en ce que** le réservoir d'huile (12) est disposé de telle sorte qu'il puisse être rempli en permanence par le biais des fuites et par un volume d'huile se libérant après la coupure du ralentisseur (9).

10. Ralentisseur hydrodynamique (9) selon l'une quelconque des revendications précédentes, **caractérisé en ce que** le réservoir d'huile (12) peut en outre être rempli par la pompe (1) en huile provenant du carter de transmission (15).

11. Ralentisseur hydrodynamique (9) selon l'une quelconque des revendications précédentes, **caractérisé en ce que** le réservoir d'huile (12) peut être constitué à la fois dans le boîtier du ralentisseur et aussi par un récipient externe séparé.

12. Ralentisseur hydrodynamique (9) selon l'une quelconque des revendications précédentes, **caractérisé en ce que** le réservoir d'huile (12) est disposé aussi près que possible du ralentisseur (9).

13. Ralentisseur hydrodynamique (9) selon l'une quelconque des revendications précédentes, **caractérisé en ce que** le réservoir d'huile (12) présente une connexion à un système de purge de la transmission, ou à un dispositif de purge de la transmission.

14. Ralentisseur hydrodynamique (9) selon l'une quelconque des revendications 1 à 12, **caractérisé en ce que** le réservoir d'huile (12) présente un dispositif de purge propre.

15. Procédé pour commander un ralentisseur hydrodynamique (9) pour un véhicule automobile, qui est commandé par le biais d'un système électrohydraulique (18), avec une unité de commande et de régulation (17), et qui forme avec une transmission une alimentation en huile commune (23), un débit volumique d'une pompe (1) pouvant être réglé indépendamment de la vitesse du véhicule ou de la vitesse de rotation de l'arbre d'articulation ou du ralentisseur, **caractérisé en ce que** l'alimentation en huile commune (23) se compose d'un réservoir d'huile (12) et d'un carter de transmission (15), et le réservoir d'huile (12) est connecté par le biais d'une soupape de remplissage (10) à un canal d'aspiration (13) de la pompe (1).

16. Procédé selon la revendication 15, **caractérisé en ce que** la soupape de remplissage (10) est commandée hydrauliquement, de préférence par le biais d'une soupape déjà présente (11), qui est réalisée de préférence sous forme de soupape proportionnelle.

17. Procédé selon la revendication 15, **caractérisé en ce que** la soupape de remplissage (10) est commandée de manière électrique, ou électromagnétique, par le biais de l'unité de commande et de régulation (17).

18. Procédé selon la revendication 15, **caractérisé en ce que** la soupape de remplissage (10) est commandée par le biais d'une unité séparée, par exemple de manière électrique, électromagnétique, hydraulique, pneumatique ou par le biais d'un moteur de commande.

19. Procédé selon l'une quelconque des revendications 15 à 18, **caractérisé en ce que** le réservoir d'huile (12) est rempli en permanence par une fuite existante et par un volume d'huile se libérant après la coupure du ralentisseur (9).

20. Procédé selon l'une quelconque des revendications 15 à 19, **caractérisé en ce que** le réservoir d'huile (12) est en outre rempli par la pompe (1) en huile provenant du carter de transmission (15).

21. Procédé selon l'une quelconque des revendications 15 à 20, **caractérisé en ce que** le réservoir d'huile (12) est purgé par le biais d'un système de purge de la transmission ou par un dispositif de purge de la transmission.

22. Procédé selon l'une quelconque des revendications 15 à 20, **caractérisé en ce que** le réservoir d'huile (12) est purgé par le biais d'un dispositif de purge propre.
